# DEMANDE DE BREVET EUROPEEN

(11) **EP 1 700 726 A2**
(43) Date de publication de la demande: **13.09.2006**
(21) Numéro de dépôt: 06110448.5
(22) Date de dépôt: 27.02.2006
(51) Int. Cl.: B60J 1/20

(54) **Dispositif d'occultation pour véhicule automobile, et véhicule correspondant**

(30) Priorité: 08.03.2005 FR 0502325
(71) Demandeur: WAGON SAS, 79302 Bressuire Cédex (FR)
(72) Inventeur: Jincheleau, Michel, 79320, Moncoutant (FR)
(74) Mandataire: Bioret, Ludovic

(57) **Abrégé**

L'invention concerne un dispositif d'occultation pour une surface vitrée (1) d'un véhicule automobile, comprenant un rideau d'occultation principal (2), dont une première extrémité est équipée d'une barre de tirage (4), mobile entre au moins deux positions, une position repliée et une position déployée, et une seconde extrémité est solidarisée à des moyens d'enroulement,

Selon l'invention, une extrémité desdits moyens d'enroulement est solidaire d'une structure fixe située au voisinage d'un coin de ladite surface vitrée (1), par l'intermédiaire de moyens de fixation comprenant une articulation (20) permettant le basculement en rotation desdits moyens d'enroulement autour d'un axe sensiblement perpendiculaire à ladite surface vitrée (1), de façon que ledit dispositif d'occultation puisse prendre au moins deux états :
- un état de repos dans lequel l'axe principal desdits moyens d'enroulement est essentiellement parallèle à un bord (5) de ladite surface vitrée (1) et s'étend le long de ce bord (5), ledit rideau d'occultation principal (2) étant alors dans ladite position repliée ; et
- un état de travail dans lequel desdits moyens d'enroulement forment un angle non nul avec ledit bord (5).

## Description

Le domaine de l'invention est celui des stores, notamment pour véhicule automobile. Plus précisément, l'invention concerne les stores à rideau d'occultation amovible, destinés à être déployés pour occulter notamment une baie non rectangulaire.

L'invention concerne en particulier les stores à enrouleur, mais d'autres modes de repliement du rideau peuvent être mis en oeuvre (tels que par exemple un repliement du rideau suivant des plis préformés).

Classiquement, un store à enrouleur présente un rideau (ou toile) d'occultation d'une surface vitrée (ou baie) en position déployée. L'enroulement du rideau est généralement assuré par des moyens de rappel logés à l'intérieur du tube d'enroulement.

Une des extrémités du rideau est montée sur un rouleau, ou tube enrouleur, mobile en rotation. En position repliée, la toile est essentiellement enroulée autour du tube d'enroulement.

L'autre extrémité du rideau est munie d'une barre de tirage pouvant être actionnée manuellement ou de façon motorisée, pour déployer le store devant la surface vitrée.

Selon des techniques connues, le rideau est généralement maintenu en position déployée par l'accrochage de la barre de tirage à la partie du châssis de la surface vitrée ou de la structure voisine, au moyen de crochets par exemple destinés à recevoir la barre de tirage et à la retenir contre la force de rappel exercée par le tube d'enroulement.

Dans de nombreux cas, et par exemple pour les vitres latérales ou arrière de la plupart des véhicules actuels, la baie présente une forme non rectangulaire, et souvent trapézoïdale. Dans ce cas, une toile d'occultation classique rectangulaire n'assure pas une occultation efficace et esthétique de la surface vitrée.

Par exemple, il se peut que le bord le long duquel est fixé le tube d'enroulement du rideau ne soit pas parallèle au bord opposé par exemple, auquel cas la barre de tirage ne pourra pas être maintenue parallèlement à ce bord lorsque le rideau est déployé.

Ainsi, la surface vitrée ne sera pas occultée de façon efficace et esthétique, et la solution consistant par exemple à déployer le rideau d'occultation légèrement au-delà du bord opposé peut s'avérer difficile à mettre en oeuvre dans la mesure où l'espace disponible autour des surfaces vitrées est généralement restreint et ne permet pas réellement de débordement du rideau lorsqu'il est déployé.

Les techniques de l'art antérieur envisagent également d'adapter la forme du rideau en fonction de la forme de la baie à occulter en utilisant un rideau de forme similaire à celle de la baie.

Cependant, en fonction de la forme de la surface vitrée, il pourra être difficile d'adapter la forme du store. En particulier, il n'est classiquement pas évident d'occulter une vitre dont le bord le long duquel est disposé le tube d'enroulement forme un angle supérieur à 90° avec son bord voisin. En effet, cela nécessiterait de fixer sur le tube d'enroulement un rideau dont un des bords latéraux forme également un angle de plus de 90° avec le tube d'enroulement pour obtenir une occultation efficace le long du bord de la surface vitrée.

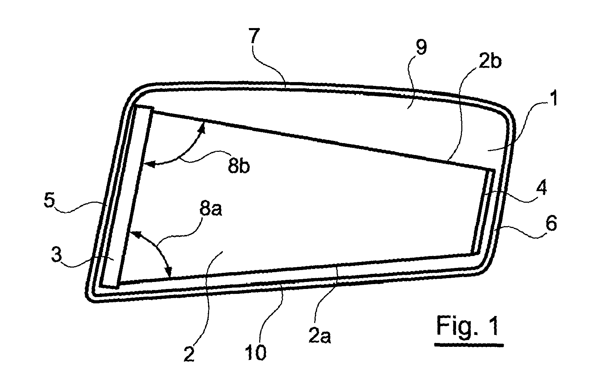

On comprend aisément qu'un tel store est difficile à mettre en oeuvre puisqu'il « déborderait » du tube d'enroulement lors l'enroulement. En d'autres termes, si le rideau suit l'un des bords latéraux, lors de son déroulement, il ne peut pas suivre l'autre bord latéral. L'occultation est alors insuffisante, une zone importante n'étant pas couverte, comme cela apparaît sur la figure 1, discutée ci-après.

L'invention a notamment pour objectif de pallier ces inconvénients de l'art antérieur.

Plus précisément, un objectif de l'invention est de fournir une technique permettant une occultation intégrale ou pratiquement intégrale d'une surface vitrée de véhicule automobile, et en particulier, d'une vitre non rectangulaire.

Un autre objectif de l'invention est de proposer une technique pour l'occultation d'une surface non rectangulaire qui reste simple et peu coûteux à mettre en oeuvre.

Un autre objectif de l'invention est de proposer une technique qui soit simple à monter dans le véhicule et qui ne nécessite pas de réglages particuliers.

Ces objectifs, ainsi que d'autres qui apparaîtront par la suite, sont atteints à l'aide d'un dispositif d'occultation pour une surface vitrée d'un véhicule automobile, comprenant un rideau d'occultation principal, dont une première extrémité est équipée d'une barre de tirage, mobile entre au moins deux positions, une position repliée et une position déployée, et une seconde extrémité est solidarisée à des moyens d'enroulement,

Selon l'invention, une extrémité desdits moyens d'enroulement est solidaire d'une structure fixe située au voisinage d'un coin de ladite surface vitrée, par l'intermédiaire de moyens de fixation comprenant une articulation permettant le basculement en rotation desdits moyens d'enroulement autour d'un axe sensiblement perpendiculaire à ladite surface vitrée, de façon que ledit dispositif d'occultation puisse prendre au moins deux états :
- un état de repos dans lequel l'axe principal desdits moyens d'enroulement est essentiellement parallèle à un bord de ladite surface vitrée et s'étend le long de ce bord, ledit rideau d'occultation principal étant alors dans ladite position repliée ; et
- un état de travail dans lequel desdits moyens d'enroulement forment un angle non nul avec ledit bord.

Ainsi, l'invention repose sur une approche nouvelle et inventive consistant à occulter une surface vitrée grâce à un dispositif d'occultation monté au niveau d'un des coins de la surface vitrée via une articulation permettant le basculement des moyens d'enroulement. Dans l'état de repos, les moyens d'enroulement s'étendent le long d'un bord de la surface vitrée, et lors du déploiement du rideau, ou préalablement au déploiement de celui-ci, ils basculent autour de l'articulation de façon à s'écarter du bord de la vitre le long duquel ils s'étendaient, pour prendre l'état de travail.

Le basculement du dispositif permet ainsi d'orienter le déploiement du rideau d'occultation de façon à permettre une occultation efficace de la surface vitrée, et en particulier, une occultation plus importante de la surface que celle pouvant être obtenue dans le cas où le basculement n'est pas prévu et où le dispositif reste maintenu le long d'un des bords de la surface vitrée.

Un tel dispositif pourra en particulier être utilisé pour l'occultation de surfaces vitrées non rectangulaires. On pourra en effet prévoir que l'angle de basculement des moyens d'enroulement est tel qu'un bord latéral du rideau principal en position déployée s'étend parallèlement le long d'un bord de la surface vitrée, adjacent à celui le long duquel s'étendaient les moyens d'enroulement avant basculement. Dans ce cas, lors du déroulement, les moyens d'enroulement sont sensiblement perpendiculaires à ce bord.

L'invention permet en effet une occultation efficace d'une surface dont l'angle formé entre le bord le long duquel s'étend le dispositif d'occultation en position repliée et un bord adjacent est supérieur à 90° (comme c'est le cas lorsque la vitre présente quatre côtés et n'est pas rectangulaire).

De façon préférée, les moyens d'enroulement mis en oeuvre pourront avantageusement comprendre un tube d'enroulement comprenant des moyens de rappel de façon que, dans la position repliée, le rideau d'occultation principal soit enroulé sur le tube d'enroulement sous l'action des moyens de rappel.

Les moyens de rappel pourront comprendre un ressort pouvant être logé à l'intérieur du tube d'enroulement.

Des moyens d'accrochage de la barre de tirage en fin de déploiement du rideau pourront être prévus au niveau du châssis de la surface vitrée par exemple ou de façon à permettre un accrochage de celle-ci à des stades de déploiement intermédiaire du rideau.

Selon un premier mode de réalisation avantageux de l'invention, l'articulation permettant le basculement du dispositif est solidaire d'un palier équipant une extrémité desdits moyens d'enroulement.

Selon un second mode de réalisation avantageux de l'invention, le dispositif comprend un boîtier à l'intérieur duquel est logé ledit rideau d'occultation principal lorsqu'il est dans ladite position repliée, et en ce que ladite articulation est solidaire dudit boîtier.

Ainsi, lorsqu'un boîtier est prévu, l'articulation pourra être directement solidaire d'une extrémité du boîtier de façon à permettre son basculement.

Lorsque le rideau d'occultation est monté sur un tube d'enroulement, celui-ci sera alors logé à l'intérieur du boîtier. Le boîtier pourra présenter une fente permettant le passage du rideau principal lors de son déploiement, et on pourra prévoir que la barre de tirage soit bloquée en butée contre cette fente lors du repliement du rideau de façon à occulter la fente du boîtier et empêcher l'introduction d'objets à l'intérieur.

Le basculement du dispositif d'occultation, que celui-ci présente ou non un boîtier pourra être actionné manuellement, préalablement au déploiement du rideau ou simultanément au déploiement de celui-ci.

En particulier on pourra prévoir un basculement dudit état de repos audit état de travail simultané au déploiement, sous l'effet de l'actionnement de ladite barre de tirage dudit rideau d'occultation principal.

Par ailleurs, on pourra prévoir au niveau de l'articulation un système de blocage permettant de limiter l'amplitude du basculement en rotation autour de l'articulation.

On pourra également prévoir des moyens de fixation complémentaires et temporaires permettant de solidariser le dispositif d'occultation à une structure fixe située au voisinage de ladite surface vitrée en un point différent de l'articulation lorsque celui-ci est dans l'état de repos.

On pourra par exemple prévoir des moyens de fixations complémentaires permettant de clipser ou d'accrocher lesdits moyens d'enroulement et/ou le dit boîtier à l'intérieur duquel sont logés lesdits moyens d'enroulement. Ces moyens de fixation complémentaire pourront par exemple être situés au niveau de l'extrémité opposée à celle dont l'articulation est solidaire.

Cela permet d'assurer un meilleur maintien du dispositif le long d'un bord de la surface vitrée lorsque celui-ci est au repos et ainsi d'éviter une détérioration de l'articulation en limitant la contrainte exercée sur celle-ci, due notamment au poids du dispositif et aux vibrations lorsque le véhicule est en mouvement.

De façon avantageuse, le dispositif d'occultation comprend un élément d'occultation complémentaire mobile entre une position repliée et une position déployée, permettant d'occulter au moins en partie une zone de ladite surface vitrée non occultée par ledit rideau d'occultation principal lorsque celui-ci est dans ladite position déployée, ladite zone étant balayée par le basculement desdits moyens d'enroulement lors du passage dudit état de repos audit état de travail.

L'élément d'occultation complémentaire pourra ainsi permettre d'occulter la zone de la surface vitrée libérée lors du basculement des moyens d'enroulement dans l'état de travail.

Selon un premier mode de réalisation avantageux de l'invention, l'élément d'occultation complémentaire est fixé au voisinage du bord de la surface vitrée le long duquel s'étendent les moyens d'enroulement du rideau d'occultation principal dans l'état de repos. Ainsi, dans lorsque le dispositif d'occultation est dans l'état de travail l'élément d'occultation complémentaire peut être déployé sensiblement selon la même direction que le rideau d'occultation principal, depuis le bord de la vitre jusqu'aux moyens d'enroulement du rideau principal.

Selon un second mode de réalisation avantageux de l'invention, l'élément d'occultation complémentaire est fixé au voisinage des moyens d'enroulement du rideau principal ou du boîtier s'il est présent. Dans ce cas, le rideau d'occultation principal et l'élément d'occultation complémentaire seront déployés dans des directions sensiblement opposées.

En particulier, on pourra prévoir avantageusement que l'élément complémentaire est logé dans le boîtier lorsqu'il est dans la position repliée.

D'une façon générale, quel que soit le sens de déploiement de l'élément complémentaire d'occultation par rapport au rideau principal, on pourra avantageusement prévoir un déploiement indépendant pour chacun d'eux.

Selon une première approche avantageuse de l'invention, l'élément d'occultation complémentaire comprend au moins un volet articulé sur ledit boîtier (ou sur lesdits moyens d'enroulement dudit rideau principal s'il n'y a pas de boîtier).

Un tel volet peut être rigide et réalisé en plastique par exemple, ou encore comprendre une toile souple montée dans un cadre rigide. On pourra également prévoir de réaliser le volet dans un matériau à mémoire de forme de façon qu'il s'adapte à la forme imposée par son logement dans le boîtier par exemple et qu'il reprenne une forme prédéterminée lorsqu'il est déployé. On pourra par exemple prévoir que le volet soit plan lorsqu'il est replié et qu'il présente une forme incurvée en position déployée si cela s'avère nécessaire, eu égard à la forme de la surface vitrée à occulter.

De façon avantageuse, le volet est associé à des premiers moyens de rappel, tendant à le déployer de façon qu'il occulte ladite zone de ladite surface vitrée non occultée par le rideau d'occultation principal.

Selon une seconde approche avantageuse de l'invention, l'élément d'occultation complémentaire comprend au moins un rideau d'occultation complémentaire.

Celui-ci pourra alors classiquement être réalisé dans une toile souple par exemple. En outre, il pourra être monté sur un tube d'enroulement complémentaire (éventuellement équipé de moyens de rappels), et l'extrémité libre de celui-ci pourra également être équipée d'une barre de tirage complémentaire.

Des moyens d'accrochage de la barre de tirage complémentaire à une structure fixe située au voisinage du bord le long duquel s'étendait le dispositif d'occultation dans l'état de repos pourront également être prévus, lorsque le rideau d'enroulement est monté dans le même boîtier que le rideau principal par exemple. En particulier, on pourra utiliser les mêmes moyens d'accrochage que ceux cités précédemment et permettant la fixation du boîtier en un point autre que l'articulation, de façon à n'avoir à prévoir qu'un seul moyen de fixation complémentaire au niveau de la structure fixe.

D'une façon générale, on pourra prévoir des moyens d'accrochage de l'élément d'occultation complémentaire quel que soit son sens de déploiement.

De façon avantageuse, le dispositif d'occultation comprend des seconds moyens de rappels agissant sur ladite articulation et tendant à ramener ledit dispositif dans ledit état de repos.

La présence d'un second point de solidarisation du dispositif tel que mentionné précédemment pourra ainsi permettre d'éviter la dégradation dans le temps de ces seconds moyens de rappels en limitant leur utilisation aux moments où le dispositif d'occultation est utilisé puis rebasculé. Cela permet en effet d'éviter que ce soient les moyens de rappel de l'articulation qui assurent le maintien du dispositif dans l'état de repos.

Avantageusement, ledit rideau d'occultation principal se déploie selon une direction essentiellement horizontale.

L'invention concerne également tout véhicule automobile équipé d'un dispositif d'occultation tel que présenté.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique d'un dispositif d'occultation d'une surface vitrée non rectangulaire selon l'art antérieur dans la position déployée ;
- la figure 2 présente un dispositif d'occultation d'une surface vitrée non rectangulaire selon l'invention dans l'état de repos, le rideau d'occultation principal étant replié ;
- la figure 3 présente un dispositif d'occultation selon la figure 2 dans l'état de travail, le rideau d'occultation principal étant déployé ;
- la figure 4 présente un dispositif d'occultation dans l'état de travail selon la figure 3, dont l'élément d'occultation complémentaire est déployé.

Le principe général de l'invention repose sur l'occultation d'une surface vitrée (ou baie) de véhicule, et plus particulièrement d'une vitre non rectangulaire, au moyen d'un dispositif d'occultation dont la direction de déploiement du rideau d'occultation principal peut être modifiée, de façon que celui-ci occulte la surface vitrée de façon efficace.

En particulier, le dispositif selon l'invention permet d'orienter le déploiement du rideau au moyen d'une articulation permettant le basculement des moyens d'enroulement, de façon qu'au moins un bord latéral du rideau soit parallèle à un bord de la vitre dans l'état basculé (ou état de travail).

On présente en relation avec la figure 1, un dispositif d'occultation d'une surface vitrée 1 non rectangulaire selon l'art antérieur.

Le dispositif d'occultation comprend un rideau d'occultation 2 dont une extrémité est équipée d'une barre de tirage 4 et dont l'autre extrémité est montée sur un tube d'enroulement (non représenté) logé à l'intérieur d'un boîtier 3.

Le boîtier 3 est monté le long d'un bord 5 de la surface vitrée, et s'étend parallèlement à ce bord. Tel qu'illustré par la figure 1, le dispositif est dans la position déployée. La barre de tirage 4 est maintenue le long du bord 6 opposé à celui le long duquel est monté le boîtier 3.

Un bord latéral inférieur 2a du rideau 2 s'étend le long d'un bord 10 de la vitre, adjacent au bord 5 le long duquel s'étend le boîtier 3. En revanche, le bord latéral supérieur 2b du rideau 2 ne s'étend pas le long du bord 7 de la surface vitrée, opposé au bord 10. En conséquence, une zone 9 de la surface vitrée 1, située entre le bord 7 de la vitre et le bord latéral 2b du rideau 2, n'est pas occultée.

En effet, comme cela est classiquement le cas selon les dispositifs de l'art antérieur, le rideau 2 est tel que ses bords latéraux 2a et 2b forment avec le tube d'enroulement logé dans le boîtier 3 respectivement un angle 8a et 8b inférieur ou égal à 90°. Dans le cas où l'un des angles 8a et 8b s'avèrerait être supérieur à 90°C, le rideau 2 déborderait au-delà du tube d'enroulement lors de l'enroulement. Dès lors, les angles 8a et 8b sont classiquement inférieurs ou égaux à 90°.

Selon la figure 1, l'angle 8b entre le boîtier 3 et le bord latéral supérieur 2b du rideau est maximal, c'est-à-dire de 90°. Cependant, dans la mesure ou l'angle entre le bord 5 le long duquel est fixé le boîtier 3 et le bord adjacent 7 de la vitre est supérieur à 90° , il n'est pas possible selon les techniques classique d'occulter efficacement la vitre 1. En particulier, il n'est pas possible de prévoir un rideau 2 dont les bords latéraux 2a et 2b s'étendent simultanément le long des bords 10 et 7 de la vitre 1.

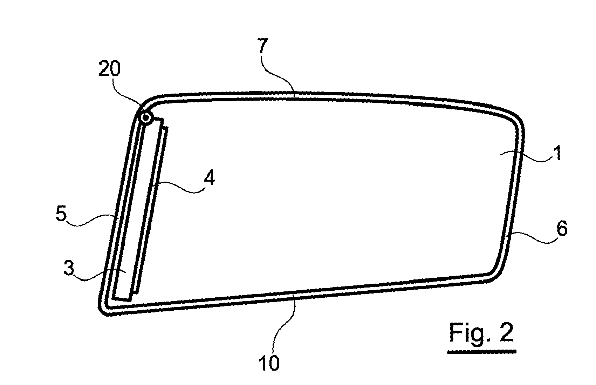

La figure 2 présente un dispositif d'occultation d'une surface vitrée 1 selon l'invention. Des références numériques identiques désignent des éléments identiques sur les figures 1, 2, 3, et 4.

Selon la figure 2, le dispositif est dans l'état de repos, le rideau d'occultation principal étant dans la position repliée autour des moyens d'enroulement (classiquement un tube d'enroulement comprenant des moyens de rappel), logé à l'intérieur du boîtier 3. La barre de tirage 4 équipant l'extrémité libre du rideau est bloquée à l'extérieur du boîtier, le long d'une fente du boîtier 3 permettant le passage du rideau 2.

Le boîtier 3 (et donc l'axe principal des moyens d'enroulement) est maintenu le long du bord 5 de la surface vitrée 1. Les moyens de fixation du boîtier 3 à une structure fixe située au voisinage de la vitre 1 comprennent une articulation 20 située au niveau d'un coin de la vitre 1.

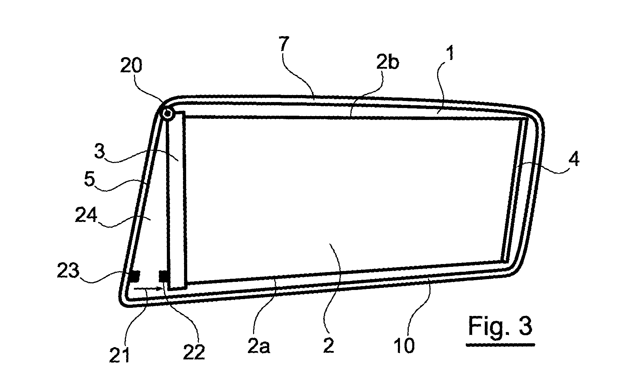

La figure 3 illustre le dispositif selon la figure 2 dans l'état de travail. Le boîtier 3 à l'intérieur duquel sont logés les moyens d'enroulement sont basculés en rotation selon l'articulation 20 et se déplacent selon la direction et l'amplitude indiquées par la flèche 21.

Le rideau d'occultation principal 2 est déployé et la barre de tirage 4 peut par exemple être fixée à des moyens d'accrochage.

Le basculement de l'état de repos illustré par la figure 2 à l'état de travail peut être réalisé préalablement au déploiement du rideau 2 ou simultanément à celui-ci, sous l'effet d'un actionnement manuel de la barre de tirage 4 par exemple.

Ainsi, le basculement en rotation des moyens d'enroulement du rideau d'occultation principal 2 permet que les bords latéraux 2a et 2b du rideau 2 s'étendent respectivement le long des deux bords opposés 7 et 10 de la vitre, adjacents au bord 5 le long duquel était maintenu le boîtier 3 dans l'état de repos. Le dispositif selon l'invention permet ainsi une occultation efficace de la vitre 1.

L'articulation 20 pourra par ailleurs être équipée d'un système de blocage permettant de limiter l'angle de basculement du boîtier 3. De plus, on pourra prévoir des moyens de rappel agissant sur l'articulation 20 et assurant le re-basculement du boîtier de l'état de travail à l'état de repos.

Par ailleurs, des moyens de fixation complémentaires du boîtier 3 (s'il y a un boîtier) dans l'état de repos pourront être prévus au niveau d'un point différent de l'articulation 20, et pourront par exemple être situés au niveau de l'extrémité opposée du boîtier 3. On pourra par exemple prévoir des crochets ou des clips 22 au niveau du boîtier et des moyens complémentaires 23 au niveau d'une structure fixe voisine du bord 5 de la vitre 1, ou encore des zones aimantées par exemple.

Dans le cas où il n'y a pas de boîtier, ces moyens de fixation complémentaire pourront être directement rapportés au niveau d'un des paliers équipant le tube d'enroulement par exemple.

Ce second point de fixation permet un meilleur maintien du dispositif dans l'état de repos. De plus, lorsque l'articulation présente des moyens de rappel assurant le re-basculement du boîtier vers l'état de repos, cela permet de soulager l'articulation et les moyens de rappels lorsque le dispositif reste dans l'état de repos. En conséquence, cela prévient une usure trop rapide de ceux-ci, due au poids du dispositif et aux vibrations du véhicule.

On pourra bien sûr également prévoir d'autres points de fixation complémentaires du boîtier le long du bord 5 de la vitre ou une bande de fixation continue telle qu'une bande aimantée par exemple.

Tel qu'illustré par la figure 3, lors du basculement du dispositif, le boîtier 3 balaye une zone 24 non occultée par le rideau d'occultation principal 2 dans l'état de travail.

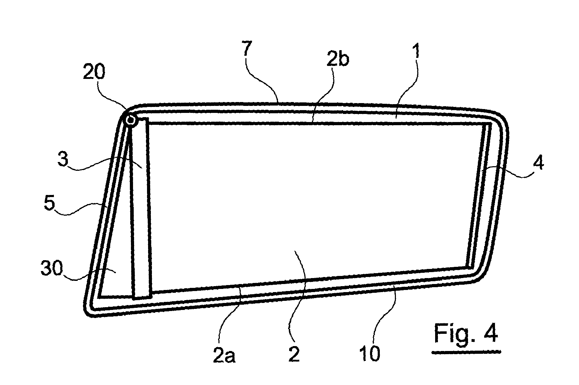

De façon à occulter plus efficacement encore la surface vitrée si cela est souhaitable, on pourra prévoir la présence d'un élément d'occultation complémentaire 30 de cette zone 24, comme illustré par la figure 4.

Tel que représenté, l'élément d'occultation complémentaire 30 est un volet ou un rideau, solidaire du boîtier 3 et pouvant être logé à l'intérieur du boîtier 3 lorsqu'il est en position repliée. Ainsi, selon le mode de réalisation présenté par la figure 4, le rideau principal 2 et le volet 30 se déploient selon des directions sensiblement opposées.

On pourra prévoir des moyens de fixation de l'élément complémentaire 30 lorsqu'il est en position déployée par exemple, ces moyens pouvant être les mêmes que ceux permettant la fixation du boîtier 3 dans l'état de repos par exemple.

Selon un autre mode de réalisation, on pourra prévoir que l'élément d'occultation complémentaire se déploie depuis le bord 5 de la surface vitrée, vers le boîtier 3 lorsque celui-ci est basculé est donc écarté du bord 5. Les déploiements du rideau principal 2 et de l'élément complémentaire 30 se font alors sensiblement selon la même direction.

Enfin, on pourra également de moyens de rappels assurant le déploiement du volet 30.

L'invention s'étend bien sûr à toute autre variante, combinaison de ces différents modes de réalisation ainsi qu'aux véhicules équipés d'un tel dispositif d'occultation.

## Revendications

1. Dispositif d'occultation pour une surface vitrée (1) d'un véhicule automobile, comprenant un rideau d'occultation principal (2), dont une première extrémité est équipée d'une barre de tirage (4), mobile entre au moins deux positions, une position repliée et une position déployée, et une seconde extrémité est solidarisée à des moyens d'enroulement,
**caractérisé en ce qu'**une extrémité desdits moyens d'enroulement est solidaire d'une structure fixe située au voisinage d'un coin de ladite surface vitrée (1), par l'intermédiaire de moyens de fixation comprenant une articulation (20) permettant le basculement en rotation desdits moyens d'enroulement autour d'un axe sensiblement perpendiculaire à ladite surface vitrée (1), de façon que ledit dispositif d'occultation puisse prendre au moins deux états :
- un état de repos dans lequel l'axe principal desdits moyens d'enroulement est essentiellement parallèle à un bord (5) de ladite surface vitrée (1) et s'étend le long de ce bord (5), ledit rideau d'occultation principal (2) étant alors dans ladite position repliée ; et
- un état de travail dans lequel lesdits moyens d'enroulement forment un angle non nul avec ledit bord (5).

2. Dispositif d'occultation selon la revendication 1, **caractérisé en ce que** ladite articulation (20) est solidaire d'un palier équipant une extrémité desdits moyens d'enroulement.

3. Dispositif d'occultation selon l'une quelconque des revendications 1 et 2,
**caractérisé en ce qu'**il comprend un boîtier (3) à l'intérieur duquel est logé ledit rideau d'occultation principal (2) lorsqu'il est dans ladite position repliée, et **en ce que** ladite articulation (20) est solidaire dudit boîtier.

4. Dispositif d'occultation selon l'une quelconque des revendications 1 à 3,
**caractérisé en ce qu'**il bascule dudit état de repos audit état de travail sous l'effet de l'actionnement de ladite barre de tirage (4).

5. Dispositif d'occultation selon l'une quelconque des revendications 1 à 4,
**caractérisé en ce qu'**il comprend un élément d'occultation complémentaire (30) mobile entre une position repliée et une position déployée, permettant d'occulter au moins en partie une zone (24) de ladite surface vitrée (1) non occultée par ledit rideau d'occultation principal (2) lorsque celui-ci est dans ladite position déployée, ladite zone (24) étant celle balayée par le basculement desdits moyens d'enroulement lors du passage dudit état de repos audit état de travail.

6. Dispositif d'occultation selon la revendication 3 et selon la revendication 5, **caractérisé en ce que** ledit élément d'occultation complémentaire (30) comprend au moins un volet articulé sur ledit boîtier (3).

7. Dispositif d'occultation selon la revendication 6, **caractérisé en ce que** ledit volet est associé à des premiers moyens de rappel, tendant à le déployer de façon qu'il occulte ladite zone (24) de ladite surface non occultée par ledit rideau principal (2).

8. Dispositif d'occultation selon la revendication 5, **caractérisé en ce que** ledit élément d'occultation complémentaire (30) comprend un rideau complémentaire.

9. Dispositif d'occultation selon la revendication 3 et selon l'une quelconque des revendications 5 à 8, **caractérisé en ce que** ledit élément d'occultation complémentaire (30) est logé dans ledit boîtier (3) lorsqu'il est dans ladite position repliée.

10. Dispositif d'occultation selon l'une quelconque des revendications 1 à 9,
**caractérisé en ce qu'**il comprend des seconds moyens de rappel agissant sur ladite articulation (20) et tendant à ramener ledit dispositif dans ledit état de repos.

11. Dispositif d'occultation selon l'une quelconque des revendications 1 à 10,
**caractérisé en ce que** ledit rideau d'occultation principal (2) se déploie selon une direction essentiellement horizontale.

12. Véhicule automobile comprenant au moins un dispositif d'occultation pour une surface vitrée (1) dudit véhicule automobile, comprenant un rideau d'occultation principal (2), dont une première extrémité est équipée d'une barre de tirage (4), mobile entre au moins deux positions, une position repliée et une position déployée, et une seconde extrémité est solidarisée à des moyens d'enroulement,
**caractérisé en ce qu'**une extrémité desdits moyens d'enroulement est solidaire d'une structure fixe située au voisinage d'un coin de ladite surface vitrée (1), par l'intermédiaire de moyens de fixation comprenant une articulation (20) permettant le basculement en rotation desdits moyens d'enroulement autour d'un axe sensiblement perpendiculaire à ladite surface vitrée (1), de façon que ledit dispositif d'occultation puisse prendre au moins deux états :
- un état de repos dans lequel l'axe principal desdits moyens d'enroulement est essentiellement parallèle à un bord (5) de ladite surface vitrée (1) et s'étend le long de ce bord (5), ledit rideau d'occultation principal (2) étant alors dans ladite position repliée ; et
- un état de travail dans lequel lesdits moyens d'enroulement forment un angle non nul avec ledit bord (5).
